Europäisches Patentamt

European Patent Office

Office européen des brevets

(11) Veröffentlichungsnummer: **0 270 920 B1**

# EUROPÄISCHE PATENTSCHRIFT

(45) Veröffentlichungstag der Patentschrift: **14.07.93**

(51) Int. Cl.⁵: **H02J 13/00**

(21) Anmeldenummer: **87117358.9**

(22) Anmeldetag: **25.11.87**

(54) Verfahren und Vorrichtung zur Erzeugung von Sende-Stromsignalen in einem Wechselstromverteilungsnetz.

(30) Priorität: **09.12.86 CH 4893/86**

(43) Veröffentlichungstag der Anmeldung:
**15.06.88 Patentblatt 88/24**

(45) Bekanntmachung des Hinweises auf die Patenterteilung:
**14.07.93 Patentblatt 93/28**

(84) Benannte Vertragsstaaten:
**AT BE DE FR GB IT LU NL SE**

(56) Entgegenhaltungen:
**EP-A- 0 175 863**
**FR-A- 2 401 563**
**GB-A- 2 008 299**
**US-A- 3 714 451**

(73) Patentinhaber: **ZELLWEGER USTER AG**
**Wilstrasse 11**
**CH-8610 Uster(CH)**

(72) Erfinder: **Konrad, Bernhard**
**Morgenhaldenweg 6**
**CH-8620 Wetzikon(CH)**

Rank Xerox (UK) Business Services
(3.10/3.6/3.3.1)

EP 0 270 920 B1

**Beschreibung**

Die Erfindung betrifft ein Verfahren zur Erzeugung von Sende-Stromsignalen in einem Wechselstromverteilungsnetz mittels eines an das Netz angeschlossenen und einen gesteuerten Schalter aufweisenden Senders, wobei durch Betätigung des Schalters eine das Sendesignal bildende Reihe von Stromimpulsen erzeugt wird, und wobei die Zeitpunkte von deren Erzeugung und/oder deren Dauer so gewählt werden, dass das resultierende Sendesignal wenigstens angenähert einem gewünschten theoretischen Signal entspricht.

Ein Verfahren dieser Art, welches in der EP-A-175 863 beschrieben ist, hat den Vorteil, dass die bei anderen bekannten Verfahren erforderlichen frequenzselektiven Ankoppelkreise wegfallen und durch ein im wesentlichen aperiodisches Netzwerk ersetzt werden. Dadurch ist es möglich, den gleichen Sender für verschiedene Sendefrequenzen zu benützen und in den Uebertragungskanal Redundanz einzuführen, indem die Signale auf verschiedenen Frequenzen abgesetzt werden. Dies erhöht die Sicherheit der Uebertragung beträchtlich.

Das genannte Netzwerk kann grundsätzlich sowohl aus reaktiven als auch aus ohmschen Komponenten bestehen. Eine nähere Analyse zeigt jedoch, dass einerseits keine Drosselspule direkt in Reihe mit dem Schalter liegen darf, wenn letzterer nicht für eine sehr hohe wiederkehrende Spannung dimensioniert ist. Und anderseits darf kein Kondensator unmittelbar mit dem Schalter geschaltet, das heisst, über diesen mit der Netzspannung oder mit einem anderen Kondensator verbunden werden, wenn der Schalter nicht für sehr hohe Spitzenströme dimensioniert ist, was jedoch zu relativ hohen Mehrkosten führen würde.

Wenn nun aufgrund dieser Gegebenheiten die Verwendung von Seriedrosseln und Parallelkondensatoren verboten ist, zumindest ohne starke dämpfende ohmsche Komponenten, dann bietet ein derartiges Netzwerk gegenüber einem einfachen Widerstand nur wenig Vorteile. Ein Widerstand hätte aber wiederum den Nachteil, dass in diesem eine erhebliche Netzfrequenzleistung verbraucht wird. Dabei sind nicht so sehr die Kosten der entsprechenden Energie, sondern vielmehr die erzeugte und abzuführende Wärme nachteilig.

Durch die Erfindung soll nun das eingangs erwähnte Verfahren dahingehend verbessert und modifiziert werden, dass für den Sender im wesentlichen nur verlustfreie Elemente verwendet werden können. Diese Aufgabe wird erfindungsgemäss dadurch gelöst, dass der Sender mindestens zwei Energiespeicher und mindestens zwei Schalter zur Steuerung des Energieaustausches zwischen diesen enthält, wobei die Energiespeicher und die Schalter so miteinander verbunden sind, dass der Austauschstrom über das Netz fliesst und dadurch die genannten Stromimpulse erzeugt werden, und dass der eine Energiespeicher durch eine Speicherdrossel und der andere Energiespeicher durch mindestens einen in Serie zu dieser angeordneten Kondensator gebildet ist, und der Energieaustausch zwischen der Speicherdrossel und dem mindestens einen Kondensator über das Netz durch die Ein-/Ausschaltzeitpunkte der Schalter und damit die Amplitude und Dauer der entstehenden Stromimpulse gesteuert wird.

Aus der FR-A-2 401 563 ist ein ähnliches Verfahren bekannt, bei welchem die Stromimpulse mittels nichtlinearer Elemente oder durch Veränderung der Eigenschaften von Komponenten des Senders moduliert werden, wobei die Informationsübertragung auf der Anregung gedämpfter Schwingungen basiert. Bei diesem Verfahren ist bei einer Aenderung der Sendefrequenz eine entsprechende Anpassung der durch einen Kondensator und eine Spule gebildeten Komponenten erforderlich, was eine entsprechende Aenderung der physikalischen Eigenschaften dieser Komponenten erfordert.

Beim vorliegenden Verfahren hingegen dienen Spule und Kondensator lediglich als Speicherelemente zur Bereitstellung der nötigen Energie, um ein vorgegebenes Sendesignal unabhängig von den Parametern dieser Komponenten nachzubilden. Damit kann derselbe Sender ohne Abstimmung für verschiedene Sendefrequenzen benutzt werden, was einen wesentlichen Vorteil des erfindungsgemässen Verfahrens bildet, weil im Uebertragungskanal mit Redundanz gearbeitet werden kann.

Die Erfindung betrifft weiter einen Sender zur Erzeugung von Sende-Stromsignalen in einem Wechselstromverteilungsnetz gemäß Anspruch 9.

Im folgenden wird die Erfindung anhand von Ausführungsbeispielen und der Zeichnungen näher erläutert; es zeigen:

Fig. 1 ein Prinzipschaltbild eines ersten Ausführungsbeispiels eines geschalteten Kondensators eines erfindungsgemässen Senders,

Fig. 2 ein Blockschaltbild eines Senders,

Fig. 3 ein Prinzipschaltbild eines zweiten Ausführungsbeispiels eines geschalteten Kondensators,

Fig. 4 ein Diagramm zur Funktionserläuterung,

Fig. 5 ein Prinzipschaltbild einer ersten Variante von Fig. 3, und

Fig. 6 ein Prinzipschaltbild einer weiteren Variante von Fig. 3.

Der in den Figuren dargestellte Sender dient zur Erzeugung von Stromimpulsen, wobei eine Folge dieser Stromimpulse möglichst gut mit einem theoretischen Signal übereinstimmen soll. Dies lässt sich durch geeignete Wahl des Zeitpunkts der Erzeugung der Stromimpulse und/oder von deren Dauer erreichen, indem nämlich der zeitliche Mittelwert des aus den Stromimpulsen gebildeten Signals (ermittelt über ein Intervall, welches ein Mehrfaches der Dauer eines Einzelimpulses beträgt) praktisch in Uebereinstimmung mit dem Mittelwert des gewünschten theoretischen Signals gebracht werden kann.

In den folgenden Figuren sind nun verschiedene Ausführungsbeispiele des für die Erzeugung der genannten Stromimpulse verwendeten Senders bzw. von dessen geschaltetem Kondensator beschrieben.

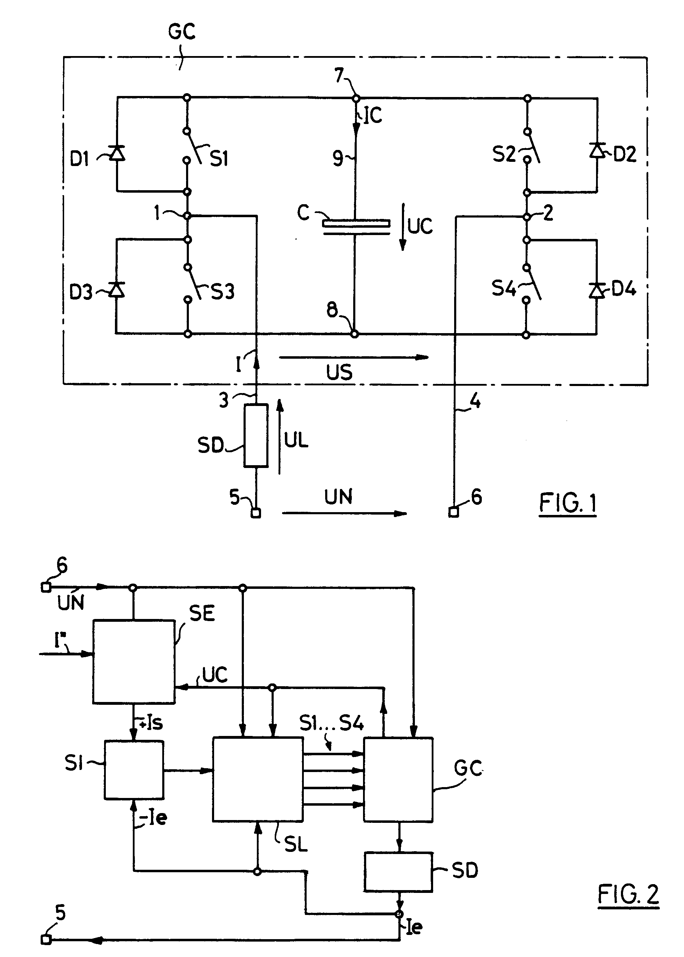

Fig. 1 zeigt ein Prinzipschaltbild eines ersten Ausführungsbeispiels eines derartigen geschalteten Kondensators GC, welcher nach Art einer Brückenschaltung aufgebaut ist und aus vier Zweigen besteht. Die beiden Knotenpunkte 1 und 2 sind je über eine Leitung 3 bzw. 4 mit den Netzklemmen 5 und 6 verbunden, zwischen denen die Netzspannung UN liegt. Die Leitung 3 enthält eine Speicherdrossel SD (Drosselspannung UL). Die beiden anderen Knotenpunkte 7 und 8 der Brückenschaltung sind über einen einen Kondensator C aufweisenden Zweig 9 miteinander verbunden. Jeder der vier Zweige der Brückenschaltung enthält eine Parallelschaltung eines gesteuerten Schalters S1, S2, S3, S4 und einer Diode D1, D2, D3, D4. Die gesteuerten Schalter S1 bis S4 sind vorzugsweise ein/ausschaltbare Einweg-Stromventile, wie beispielsweise GTO-Thyristoren oder Leistungstransistoren in bipolarer oder MOSFET-Technologie, die Dioden D1 bis D4 sind sogenannte Freilaufdioden, welche dafür sorgen, dass im Abschaltmoment eines Schalters S1 bis S4 die in der Speicherdrossel SD gespeicherte Energie positiv zur Kondensatorspannung UC des Kondensators C addiert wird, so dass an dem entsprechenden Schalter keine zu hohe wiederkehrende Spannung auftritt. Es ist denkbar, ein Stromventil und die zugehörige Freilaufdiode jeweils in einem Bauelement zu vereinigen, im Sinne eines sogenannten RLT (=rückwärts leitender Thyristor). Für die Erzeugung des Sendesignals muss eine gewisse Kondensatorspannung UC vorhanden sein. Wenn I(max) der maximale Wert des gewünschten Sendestroms ist, f die Sendefrequenz und UN(max) der Scheitelwert der Netzspannung, dann ist die geforderte Kondensatorspannung:

$$UC = UN(max) + 2.pi.f.L.I(max)$$

Diese Kondensatorspannung UC lässt sich auf folgende Weise erreichen: Bei offenen Schaltern S1 bis S4 (oder mit anderen Worten, bei gesperrten Ventilen) stellt der geschaltete Kondensator GC einen Vollweg-Brückengleichrichter dar, welcher den Kondensator C auf die Spannung UN(max) auflädt. Die dargestellte Anordnung ermöglicht nun eine weitere Aufladung des Kondensators C auf einen höheren Spannungswert, indem die Schalter S1 bis S4 so getaktet werden, dass dem Netz eine 50 Hz-Wirkleistung entnommen wird. Da nun aber der geschaltete Kondensator GC keine prinzipbedingt verlustbehafteten Elemente enthält, muss diese ansteigende Energie eine weitere Aufladung des Kondensators C bewirken.

Wenn fN die Netzfrequenz ist, und î die Amplitude des Eingangsstroms und ûN den Scheitelwert der Netzspannung bezeichnet, dann gelten für den Eingangsstrom I, die Netzspannung UN, die Leistung P und die Energieänderung W(t) im geschalteten Kondensator GC die folgenden Beziehungen:

$$I = î . sin (2.pi.fN.t)$$
$$UN = ûN . sin (2.pi.fN.t)$$
$$P = UN . I = ûN.î.(sin(2.pi.fN.t))2$$
$$W(t) = (ûN.î).t/2 - (ûN.î).sin(4.pi.fN.t)/(8.pi.f)$$

Die Energie im Kondensator C nimmt also monoton zu, solange im Eingangsstrom I ein netzfrequenter, in Phase mit der Netzspannung befindlicher Anteil vorhanden ist.

Fig. 2 zeigt ein Blockschaltbild eines erfindungsgemässen Senders, welcher darstellungsgemäss zusätzlich zum geschalteten Kondensator GC und zur Speicherdrossel SD eine Stufe SE zur Sollwert-Erzeugung, eine Steuerlogik SL, und einen Soll-/Istwert-Vergleicher SI aufweist.

Am Eingang 6 liegt die Netzspannung UN, welche der Sollwert-Erzeugung SE, der Steuerlogik SL und dem geschalteten Kondensator GC zugeführt wird. Die Sollwert- Erzeugung SE, welcher neben der Netzspannung UN noch die Kondensatorspannung UC und weitere Steuerparameter, wie beispielsweise der Signalstrom I* zugeführt werden, generiert das gewünschte Sendesignal Is als Analogsignal am einen Eingang des Soll-/Istwert-Vergleichers SI, an dessen anderem Eingang das Abbild des Sendestroms Ie liegt. Das gewünschte Sendesignal Is kann beispielsweise ein rein sinusförmiges Signal sein. Die Steuerlogik SL bildet nun diesen Sollwert durch geeignetes Schalten der Schalter (Ventile) S1 bis S4 des geschalteten Kondensators GC nach, indem die Differenz Is-Ie möglichst vollständig auf Null geregelt wird, was nach bekannten Verfahren der Leistungselektronik, wie beispielsweise zeitdiskrete Zweipunkt- oder Dreipunktre-

EP 0 270 920 B1

gelung erfolgt.

Hier ist ersichtlich, wozu die geforderte Anfangsspannung UC des Kondensators C erforderlich ist. Sie gewährleistet durch Bereitstellung der nötigen Spannung die maximal erforderliche Stromänderung in der Speicherdrossel SD.

Die letztere glättet den Eingangsstrom durch Integration der Spannungspulse UN-US, wobei US die vom geschalteten Kondensator GC erzeugte Spannung bezeichnet.

Durch geeignete Vorgabe eines 50 Hz-Sollstroms (Ladestrom) kann also die Ladung des Kondensators C erhöht werden und bei ausreichender Kondensatorspannung kann ein vorgegebenes Sendesignal (Sendestrom) nachgebildet werden. Zur Ermöglichung eines kontinuierlichen Sendebetriebs können diese beiden Prozesse in einfacher Weise überlagert werden, indem die Sollwerte von Ladestrom und Sendestrom addiert und als gemeinsamer Sollwert ausgegeben werden.

Ob die Ladung des Kondensators C erhöht werden muss, wird beispielsweise einmal je Netzperiode durch Abfrage der Kondensatorspannung UC ermittelt und je nach dem Ergebnis wird Ladestrom vorgegeben oder nicht. Eine eventuelle zu hohe Ladung des Kondensators kann durch Umkehrung des Vorzeichens des Ladestroms abgebaut werden.

Die folgende Tabelle 1 ergibt eine Uebersicht über die zulässigen Schaltzustände der Schalter und Dioden S1 bis S4 bzw. D1 bis D4 des geschalteten Kondensators GC (Fig. 1) des Senders sowie des Verhaltens des Eingangsstroms I, des Kondensatorstroms IC, der Kondensatorspannung UC und der Drosselspannung UL.

In der Tabelle 1 werden ausserdem folgende Symbole verwendet:

0: Ventil/Diode sperrt

1: Ventil/Diode leitet

X: Ventil leitet nicht wegen

   physikalischer Gegebenheit,

   kann eingeschaltet sein

s: Signalwert steigt

f: Signalwert fällt

=: Signalwert gleichbleibend

g: grösser als Null

k: kleiner als Null

| S1 | D1 | S2 | D2 | S3 | D3 | S4 | D4 | I | IC | UC | UL |
|----|----|----|----|----|----|----|----|-----|------|----|---------|
| 1 | 0 | 0 | 0 | 0 | 0 | 1 | 0 | f k | +I | f | UN - UC |
| X | 1 | 0 | 0 | 0 | 0 | X | 1 | f g | +I | s | UN - UC |
| 0 | 0 | 1 | 0 | 1 | 0 | 0 | 0 | s g | -I | s | UN + UC |
| 0 | 0 | X | 1 | X | 1 | 0 | 0 | s k | -I | f | UN + UC |
| 1 | 0 | X | 1 | 0 | 0 | 0 | 0 | s,f k | Null | = | UN |
| X | 1 | 1 | 0 | 0 | 0 | 0 | 0 | s,f g | Null | = | UN |
| 0 | 0 | 0 | 0 | 1 | 0 | X | 1 | s,f g | Null | = | UN |
| 0 | 0 | 0 | 0 | X | 1 | 1 | 0 | s,f k | Null | = | UN |

Tabelle 1

Im wesentlichen ergeben sich drei verschiedene Bestimmungsgleichungen für Strom und Spannung:

$$UL = UN + UC \quad mit \quad IC = -I$$

$$UL = UN - UC \quad mit \quad IC = +I$$

$$UL = UN \quad mit \quad IC = Null$$

Aus diesen Bestimmungsgleichungen und der Beziehung dI = 1/L . UL.dt können die Stromformen der Zwei- oder Dreipunktregelung ermittelt werden.

Die Grösse der Komponenten L und C richtet sich nach den zulässigen Werten von Spannungsbelastung der Ventile, Stromwelligkeit, usw. Sinnvolle Werte sind beispielsweise:î = 10 A, L = 1 mH, C = 1 mF.

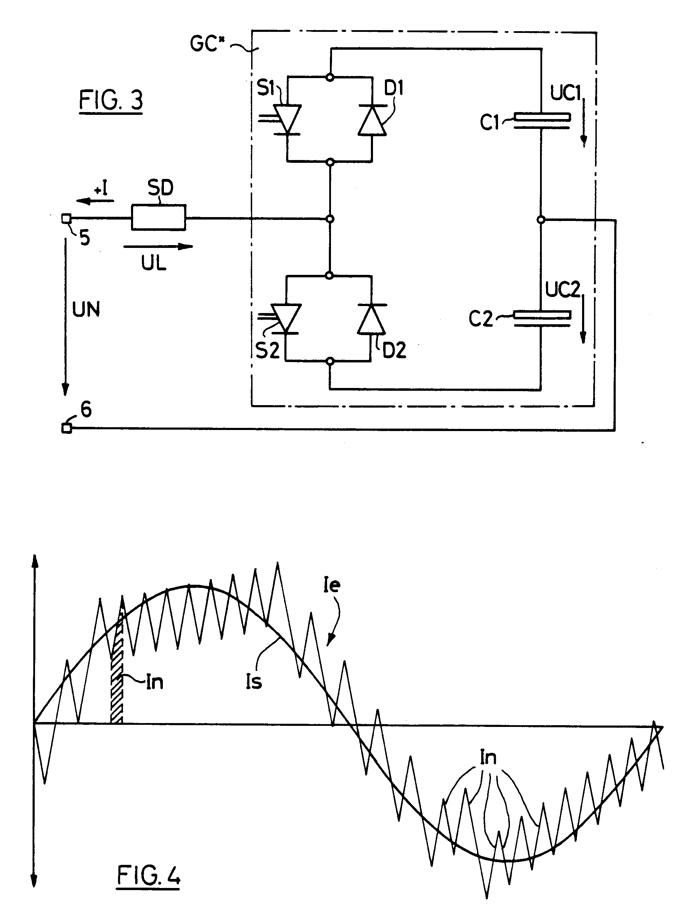

In Fig. 3 ist ein geschalteter Kondensator GC* dargestellt, welcher aus einer Antiparallelschaltung von zwei Zweigen mit je einem gesteuerten Schalter (Ventil) S1, S2 und einem Kondensator C1 bzw. C2 in Reihe besteht. Hier entsteht durch geeignete Betätigung der Schalter S1 und S2 ein Energiefluss zwischen dem Netz und den beiden Kondensatoren C1, C2, und umgekehrt.

Tabelle 2 gibt in Analogie zu Tabelle 1 eine Uebersicht über die bei den verschiedenen Schaltstellungen der Schalter S1, S2 in Abhängigkeit von Eingangsstrom I und Netzspannung UN resultierende Drosselspannung UL sowie über das Verhalten der Kondensatorspannungen UC1 und UC2. Die verwendeten Symbole entsprechen denjenigen von Tabelle 1.

| Fall | S1 | D1 | S2 | D2 | I | UC1 | UC2 | UL |
|------|----|----|----|----|---|-----|-----|-----|
| a | 1 | 0 | 0 | 0 | g | f | = | UN − UC1 |
| b | X | 1 | 0 | 0 | k | s | = | UN − UC1 |
| c | 0 | 0 | X | 1 | g | = | s | UN + UC2 |
| d | 0 | 0 | 1 | 0 | k | = | f | UN + UC2 |

Tabelle 2

Wenn die Kondensatorspannungen UC1 und UC2 grösser als UN(max) sind und UN grösser als Null ist, und man zündet beispielsweise S2 für eine Zeitdauer T1, dann wird der LC-Schwingkreis angestossen und es fliesst ein Strom der von einem Wert I1 annähernd linear auf einen Wert I2 ansteigt. Für die Stromänderung gilt: $dI/dt = (UN + UC2)/L$.

Wird nach der Zeit T1 für eine Zeit T2 das Ventil S2 gelöscht, dann sorgt die Speicherdrossel SD für eine weitere Zirkulation des Stroms, C2 entlädt sich und C1 lädt sich auf, da nun D1 leitet. Dabei sinkt der Strom linear vom Wert I2 auf den Wert I1 ab, aber mit einer anderen Steilheit. Es entstehen somit trapezförmige Stromimpulse verschiedenen Energieinhalts. Jetzt gilt für die Stromänderung $dI/dt = (UN − UC1)/L$.

Der über das Netz zwischen der Speicherdrossel SD und den Kondensatoren C1 und C2 und umgekehrt stattfindende Energiefluss ist durch die Länge der Stromimpulse, das heisst, durch die Länge der Zeitspannen T1 und T2 steuerbar. Wenn man die Fälle b und c bevorzugt, also für diese Fälle längere Impulszeiten wählt als während a und d, dann erhöht sich die Spannung an C1 und C2. Entsteht an den den Kondensatoren C1 und C2 eine zu hohe Spannung, dann kann man diese durch Bevorzugung der Fälle a und d gegenüber b und c abbauen.

Wie in der Beschreibungseinleitung erwähnt wurde, ist die Möglichkeit, den gleichen Sender ohne Abstimmung für verschiedene Sendefrequenzen benützen zu können, einer der Hauptvorteile dieser Gattung von Sendern, weil man dadurch im Uebertragungskanal mit Redundanz arbeiten kann. Die Sendung von als Telegramme bezeichneten Informationen grundsätzlich gleichen Inhalts, aber mit verschiedenen Frequenzen, kann entweder nacheinander oder gleichzeitig erfolgen.

Im ersten Fall wird die Sollwerterzeugung SE (Fig. 2) so ausgebildet, dass sie ein rein sinusförmiges Signal erzeugt, welches beispielsweise in Amplitude, Frequenz oder Phase moduliert ist. Im zweiten Fall, also bei der gleichzeitigen Sendung mehrerer Telegramme auf verschiedenen Frequenzen, wird die Sollwerterzeugung SE so ausgeführt, dass sie die Summe der Signale der verschiedenen Telegramme generiert, wobei der Sender diesen Sollwert mittels einer Reihe von Stromimpulsen approximiert. Da der Spitzenwert des Sendestroms in diesem Fall höher liegt als im ersten, müssen die Elemente des Senders entsprechend dimensioniert werden.

Die in den Figuren dargestellte Speicherdrossel SD wird bei Installation des Senders in einem Niederspannungsnetz vorzugsweise als Spule mit Eisenkern und Luftspalt ausgebildet. Bei Installation des Senders in einem Hochspannungsnetz, oder bei Auslegung der Schalter S1 bis S4 für relativ tiefe Spannungen, ist es vorteilhaft, die Speicherdrossel SD durch die Streuinduktivität eines Transformators zu ersetzen. Im Fall einer Ausbildung des geschalteten Kondensators GC nach Fig. 1, würde die Primärwicklung dieses Transformators zwischen die Klemmen 5 und 6 und die Sekundärwicklung zwischen die Klemmen 1 und 2 zu liegen kommen.

In Fig. 4 ist anhand eines Diagramms dargestellt, wie das aus den einzelnen Stromimpulsen zusammengesetzte Sendesignal mit dem gewünschten theoretischen Signal in Uebereinstimmung gebracht werden kann.

Beim dargestellten Beispiel ist das gewünschte Sendesignal Is sinusförmig und der Sendestrom Ie ist aus einzelnen Stromimpulsen In zusammengesetzt. Ein einzelner Stromimpuls entspricht dabei der schraffierten Fläche In. Das gewünschte Sendesignal Is wird periodisch abgetastet und es wird für jeden Abtastwert ermittelt, ob der aktuelle Wert des jeweiligen Stromimpulses In grösser oder kleiner ist als der entsprechende diskrete Wert von Is. Anhand des Ergebnisses dieses Vergleichs und unter Berücksichtigung dessen, ob der jeweilige Stromimpuls In steigt oder fällt, erfolgt die Auswahl des nächsten Stromimpulses und die entsprechende Tastung der Schalter S1 bis S4 oder S1, S2 gemäss den Tabellen 1 bzw. 2.

Es kann zur Erzielung einer besseren Approximation des gewünschten theoretischen Signals Is durch das aus den Stromimpulsen In bestehende Sendesignal Ie in gewissen Fällen vorteilhaft sein, den Stromanstieg dI/dt und gleichzeitig auch die Spannung US am geschalteten Kondensator GC zu reduzieren. Dies kann dadurch erreicht werden, dass zeitweise nur die Netzspannung UN in diesem Stromkreis wirksam wird.

In diesen Fällen genügt für die Erzielung der nötigen Steilheit der Stromänderung in der Speicherdrossel SD ein Kurzschluss, was sich beim geschalteten Kondensator GC von Fig. 1 durch gleichzeitiges Zünden der Schalter S1 und S2 oder S3 und S4 erreichen lässt, in welchen Fällen jeweils ein Kurzschluss über die Speicherdrossel SD erfolgt. Wird dieser Kurzschluss unterbrochen, dann geht die in der Speicherdrossel SD gespeicherte Energie über die Freilaufdioden D1 bis D4 in den Kondesator C bzw. in die Kondensatoren C1, C2.

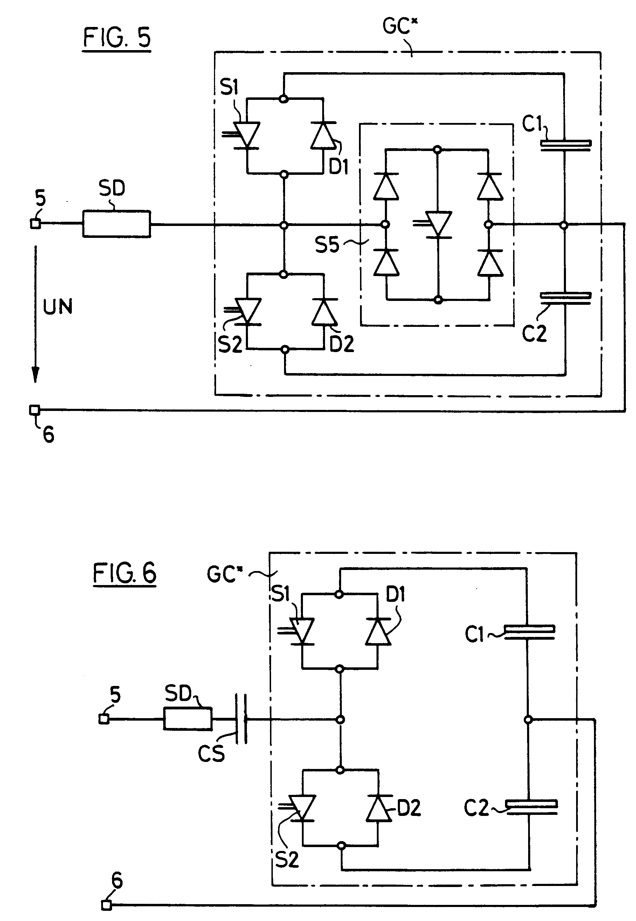

Bei der Mittelpunktschaltung von Fig. 3 ist ein derartiger Kurzschluss nicht so ohne weiteres zu realisieren, sondern erfordert, wie in Fig. 5 gezeigt, einen zwischen den beiden antiparallelen Zweigen angeordneten dritten Zweig 10 mit einem ein-/ausschaltbaren Zweiwegschalter (Zweiwegventil) S5.

Fig. 6 zeigt eine Variante des in Fig. 3 dargestellten geschalteten Kondensators GC*, bei welcher darstellungsgemäss zwischen der Speicherdrossel SD und den Schaltern S1, S2 ein Kondensator CS angeordnet ist. Durch diese Abwandlung, welche übrigens selbstverständlich auch beim geschalteten Kondensator GC von Fig. 1 vorgenommen werden kann, kann man eine Reduktion der Schalterspannung erzielen, indem sich mittels geeigneter Tastung der Schalter S1, S2 ein 50 Hz-Blindstrom ziehen lässt, der am Kondensator CS einen solchen Spannungsabfall verursacht, dass an den Schaltern nur noch eine reduzierte Spannung entsteht. Die Spannung an den Kondensatoren C1 und C2 lässt sich dadurch steuern, dass eine entsprechende 50 Hz-Wirkstromkomponente eingestellt wird.

Die Spannung an den Schaltern S1, S2 setzt sich zusammen aus den Kondensatorspannungen UC1, UC2, der Netzspannung UN, sowie aus dem 50 Hz-Spannungsabfall, der an der Reihenschaltung der Speicherdrossel SD und des Kondensators CS entsteht. Wenn man die Zünd- und Löschmomente der Schalter S1, S2 so einstellt, dass ein 50 Hz-Blindstrom zirkuliert, so werden dadurch, wie sich anhand von Tabelle 2 ermitteln lässt, die Kondensatorspannungen UC1 und UC2 im Schnitt keine Aenderung erfahren. Dieser 50 Hz-Blindstrom erzeugt im Serie-LC-Kreis von Speicherdrossel SD und Kondensator CS einen 50 Hz-Spannungsabfall, so dass an den Schaltern S1, S2 nur mehr ein kleiner Rest der 50 Hz-Spannung des Netzes entsteht.

Durch den in Reihe mit der Speicherdrossel SD angeordneten zusätzlichen Kondensator CS kann der geschaltete Kondensator GC oder GC* von Fig. 1 bzw. Fig. 3 mit Schaltern S1 bis S4 bzw. S1, S2 betrieben werden, die nicht für die volle Spannung UC bzw. UC1 + UC2 dimensioniert zu sein brauchen, welche Spannungen mindestens gleich hoch sind wie die Maximalwerte von UN beziehungsweise 2.UN ohne diesen Kondensator. Dies kann insbesondere für solche Sender vorteilhaft sein, die an der Mittelspannung angeschlossen sind. Allerdings müssen dann Vorkehrungen getroffen werden, damit nicht transiente Vorgänge auf irgendeine Art die Schalter zerstören.

Wie in der Beschreibungseinleitung der eingangs zitierten EP-Offenlegungsschrift 0 175 863 erwähnt ist, werden Sender der beschriebenen Gattung insbesondere für die Rückmeldung des Zählwerkstandes von beispielsweise Elektrizitätszählern oder der Befehlsausführung von Rundsteuerempfängern in eine Zentrale verwendet. Als Rundsteuersender für die Aussendung von Rundsteuertelegrammen von der Zentrale zu den über das Netz verteilten Rundsteuerempfänger werden dabei Sender der in der CH-Patentanmeldung Nr. 03 923/86-0 beschriebenen Art verwendet.

EP 0 270 920 B1

Der beschriebene Sender kann nun einerseits wie beschrieben für die Informationsübertragung in der Richtung von dezentral angeordneten Rundsteuerempfängern zu einer Zentrale verwendet werden und eröffnet anderseits die weitere interessante Möglichkeit der Verwendung als Rundsteuersender für die Informationsübertragung in der Richtung Zentrale - dezentrale Empfänger. Dies ergäbe gegenüber bekannten Rundsteuersendern den Vorteil, dass die Steuerfrequenz im wesentlichen unabhängig, und dass kein Gleichstromkreis erforderlich wäre. Allerdings wären, verglichen mit den statischen Frequenzumrichtern mit Gleichstromzwischenkreis, wesentlich grössere Ventile erforderlich, weil das Produkt Spitzenstrom mal wiederkehrende Spannung grösser wäre.

Bei einer derartigen Anwendung als Rundsteuersender könnte vorteilhafterweise die Speicherdrossel GD durch die Kurzschlussimpedanz (= Streuimpedanz) eines üblichen Mittelspannungs/Niederspannungstransformators (beispielsweise 20/0,4 kV) gebildet sein. Der Sender wäre dreiphasig, das heisst dreimal einphasig auszubilden.

**Patentansprüche**

1. Verfahren zur Erzeugung von Sende-Stromsignalen in einem Wechselstromverteilungsnetz mittels eines an das Netz angeschlossenen und einen gesteuerten Schalter (S1 bis S4) aufweisenden Senders, wobei durch Betätigung des Schalters eine das Sendesignal (Ie) bildende Reihe von Stromimpulsen (In) erzeugt wird und wobei die Zeitpunkte von deren Erzeugung und/oder deren Dauer so gewählt werden, dass das resultierende Sendesignal wenigstens angenähert einem gewünschten theoretischen Signal (Is) entspricht, dadurch gekennzeichnet, dass der Sender mindestens zwei Energiespeicher (SD; C, C1, C2) und mindestens zwei Schalter (S1 bis S4) zur Steuerung des Energieaustausches zwischen diesen enthält, wobei die Energiespeicher und die Schalter so miteinander verbunden sind, dass der Austauschstrom über das Netz fliesst und dadurch die genannten Stromimpulse (In) erzeugt werden, und dass der eine Energiespeicher durch eine Speicherdrossel (SD) und der andere Energiespeicher durch mindestens einen in Serie zu dieser angeordneten Kondensator (C, C1, C2) gebildet ist, und der Energieaustausch zwischen der Speicherdrossel und dem mindestens einen Kondensator über das Netz durch die Ein-/Ausschaltzeitpunkte der Schalter (S1 bis S4) und damit die Amplitude und Dauer der entstehenden Stromimpulse (In) gesteuert wird.

2. Verfahren nach Anspruch 1, dadurch gekennzeichnet, dass das resultierende Sendesignal (Ie) durch eine Reihe von mehreren unmittelbar aneinandergereihten Stromimpulsen (In) gebildet ist.

3. Verfahren nach Anspruch 2, dadurch gekennzeichnet, dass die Stromimpulse (In) eine annähernd trapezförmige oder dreieckige Form besitzen, so dass das resultierende Sendesignal (Ie) eine sägezahnartige Kontur aufweist.

4. Verfahren nach einem der Ansprüche 1 bis 3, dadurch gekennzeichnet, dass die Spannung (UC, UC1, UC2) am jeweiligen Kondensator (C, C1, C2) dadurch in der Nähe eines Sollwerts gehalten wird, dass die Schalter (S1 bis S4) so gesteuert werden, dass sich zum gewollten Signalstrom ein positiver oder negativer 50 Hz-Wirkstrom addiert.

5. Verfahren nach einem der Ansprüche 1 bis 3, dadurch gekennzeichnet, dass in Reihe mit der Speicherdrossel (SD) ein Seriekondensator (CS) angeordnet wird.

6. Verfahren nach Anspruch 5, dadurch gekennzeichnet, dass die Schalter (S1 bis S4) derart gesteuert werden, dass sich zum gewollten Signalstrom ein 50 Hz-Blindstrom addiert und längs des Seriekondensators (CS) ein 50 Hz-Spannungsabfall entsteht, so dass die Schalter für eine kleinere wiederkehrende Spannung als die der Summe von Netzspannung (UN) und Kondensatorspannung (UC, UC1, UC2) entsprechende ausgelegt werden können.

7. Verfahren nach Anspruch 6, dadurch gekennzeichnet, dass bei zu steilem Verlauf eines Stromimpulses (In) ein Kurzschluss über die Speicherdrossel (SD) herbeigeführt und damit für die Erzeugung der Stromimpulse ausschliesslich die Netzspannung (UN) verwendet wird.

8. Verfahren nach Anspruch 1, dadurch gekennzeichnet, dass bei der gleichzeitigen Sendung von Sendesignalen verschiedener Frequenzen die Summe der verschiedenen Sendesignale generiert und vom Sender mittels einer Reihe von Stromimpulsen approximiert wird.

8

**9.** Sender zur Durchführung des Verfahrens nach Anspruch 1 zur Erzeugung von Sende-Stromsignalen in einem Wechselstromverteilungsnetz, mit einer an das Netz angeschlossenen Last, mit einem Schalter (S1-S4) zum Schalten der Last und damit zur Erzeugung von das Sendesignal (Ie) bildenden Stromimpulsen (In) und mit einer Steuerlogik (SL) zur Lieferung der Steuersignale für den Schalter, dadurch gekennzeichnet, dass die Last mindestens zwei Energiespeicher (SD; C, C1, C2) enthält, von denen der eine durch eine Speicherdrossel (SD) und der andere durch mindestens einen in Serie zu dieser angeordneten Kondensator (C, C1, C2) gebildet ist, welcher Bestandteil eines geschalteten Kondensators (GC, GC*) bildet, und dass mindestens zwei Schalter (S1 bis S4) zur Steuerung des Energieaustausches zwischen den mindestens zwei Energiespeichern vorgesehen sind, wobei der Austauschstrom über das Netz fliesst und über die Ein-/Ausschaltzeitpunkte der Schalter (S1 bis S4) Amplitude und Dauer der Stromimpulse (In) gesteuert wird.

**10.** Sender nach Anspruch 9, dadurch gekennzeichnet, dass die Speicherdrossel (SD) durch die Streuimpedanz eines Transformators gebildet ist.

**11.** Sender nach Anspruch 9 oder 10, dadurch gekennzeichnet, dass der geschaltete Kondensator (GC) aus einer Brückenschaltung besteht, in deren Zweigen je ein gesteuerter Schalter (S1 bis S4) und in deren Diagonale (9) ein Speicherkondensator (C) angeordnet ist.

**12.** Sender nach Anspruch 9 oder 10, dadurch gekennzeichnet, dass der geschaltete Kondensator (GC*) durch eine Antiparallelschaltung von zwei Zweigen mit je einem gesteuerten Schalter (S1, S2) und einem Kondensator (C1, C2) in Reihe gebildet ist.

**13.** Sender nach Anspruch 11 oder 12, dadurch gekennzeichnet, dass die gesteuerten Schalter (S1 bis S4) durch ein-/ausschaltbare Einweg-Stromventile gebildet sind.

**14.** Sender nach Anspruch 11 oder 12, gekennzeichnet durch einen in Reihe mit der Speicherdrossel (SD) angeordneten Seriekondensator (CS).

**15.** Sender nach Anspruch 12, dadurch gekennzeichnet, dass zwischen den beiden antiparallelen Zweigen ein dritter Zweig (10) mit einem ein-/ausschaltbaren Zweiwegventil (S5) vorgesehen ist.

**16.** Sender nach Anspruch 10, dadurch gekennzeichnet, dass der Sender bei Verwendung als Rundsteuersender in einer Zentrale dreiphasig ausgebildet ist.

## Claims

**1.** Method for generating transmit current signals in an alternating-current distribution network by means of a transmitter connected to the network and exhibiting a controlled switch (S1 to S4), in which method a series of current pulses (In) forming the transmit signal (Ie) is generated by operating the switch and in which the times of their generation and/or their duration are selected in such a manner that the resultant transmit signal corresponds at least approximately to a desired theoretical signal (Is), characterised in that the transmitter contains at least two energy stores (SD; C, C1, C2) and at least two switches (S1 to S4) for controlling the energy exchanged between these stores, the energy stores and the switches being connected to one another in such a manner that the exchange current flows via the network and as a result the said current pulses (In) are generated, and in that one energy store is formed by a storage reactor (SD) and the other energy store is formed by at least one capacitor (C, C1, C2) arranged in series therewith, and the energy exchanged between the storage reactor and the at least one capacitor via the network is controlled by the switching-on/off times of the switches (S1 to S4) and thus the amplitude and duration of the current pulses (In) produced.

**2.** Method according to Claim 1, characterised in that the resultant transmit signal (Ie) is formed by a series of several current pulses (In) directly joined together.

**3.** Method according to Claim 2, characterised in that the current pulses (In) have an approximately trapezoidal or triangular shape so that the resultant transmit signal (Ie) exhibits a sawtooth-like contour.

9

4. Method according to one of Claims 1 to 3, characterised in that the voltage (UC, UC1, UC2) across the respective capacitor (C, C1, C2) is held in the vicinity of a setpoint by the fact that the switches (S1 to S4) are controlled in such a manner that a positive or negative 50-Hz active current is added to the wanted signal current.

5. Method according to one of Claims 1 to 3, characterised in that a series capacitor (CS) is arranged in series with the storage reactor (SD).

6. Method according to Claim 5, characterised in that the switches (S1 to S4) are controlled in such a manner that a 50-Hz reactive current is added to the wanted signal current and a 50-Hz voltage drop arises across the series capacitor (CS) so that the switches can be designed for a smaller repetitive voltage than that corresponding to the sum of mains voltage (UN) and capacitor voltage (UC, UC1, UC2).

7. Method according to Claim 6, characterised in that when the variation of a current pulse (In) is too steep, a short circuit is produced via the storage reactor (SD) and thus the mains voltage (UN) is exclusively used for generating the current pulses.

8. Method according to Claim 1, characterised in that when transmit signals of different frequencies are simultaneously transmitted, the sum of the various transmit signals is generated and approximated by the transmitter by means of a series of current pulses.

9. Transmitter for carrying out the method according to Claim 1 for generating transmit current signals in an alternating-current distribution network, with a load connected to the network, with a switch (S1 - S4) for switching the load and thus for generating current pulses (In) forming the transmit signal (Ie) and with a control logic (SL) for supplying the control signals for the switch, characterised in that the load contains at least two energy stores (SD; C, C1, C2), one of which is formed by a storage reactor (SD) and the other one of which is formed by at least one capacitor (C, C1, C2) arranged in series therewith, which forms a component of a switch capacitor (GC, GC*), and in that at least two switches (S1 to S4) are provided for controlling the energy exchange between the at least two energy stores, the exchange current flowing via the network and amplitude and duration of the current pulses (In) being controlled via the switching-on/off times of the switches (S1 to S4).

10. Transmitter according to Claim 9, characterised in that the storage reactor (SD) is formed by the stray impedance of a transformer.

11. Transmitter according to Claim 9 or 10, characterised in that the switch capacitor (GC) consists of a bridge circuit, in the branches of which one controlled switch (S1 to S4) each and in the diagonal (9) of which a storage capacitor (C) is arranged.

12. Transmitter according to Claim 9 or 10, characterised in that the switched capacitor (GC*) is formed by an antiparallel circuit of two branches with one controlled switch (S1, S2) each and a capacitor (C1, C2) in series.

13. Transmitter according to Claim 11 or 12, characterised in that the controlled switches (S1 to S4) are formed by one-way current valves which can be switched on/off.

14. Transmitter according to Claim 11 or 12, characterised by a series capacitor (CS) arranged in series with the storage reactor (SD).

15. Transmitter according to Claim 12, characterised in that a third branch (10) with a two-way valve (S5), which can be switched on/off, is provided between the two antiparallel branches.

16. Transmitter according to Claim 10, characterised in that the transmitter is constructed to have three phases when used as ripple-control transmitter in a central station.

EP 0 270 920 B1

**Revendications**

1. Dispositif pour produire des signaux de courant d'émission dans un réseau de distribution de courant alternatif à l'aide d'un émetteur connecté au réseau et comprenant un commutateur commandé (S1 à S4), l'actionnement du commutateur donnant lieu à la production d'une série d'impulsions de courant (In) formant le signal d'émission (Ie) et les instants de temps de la production de celles-ci et/ou leur durée étant choisie de telle façon que le signal d'émission résultant correspondante au moins approximativement à un signal théorique souhaité (Is), caractérisé en ce que l'émetteur comprend au moins deux dispositifs de stockage d'énergie (SD; C, C1, C2) et au moins deux commutateurs (S1 à S4) pour la commande de l'échange d'énergie entre ceux-ci, les dispositifs de stockage d'énergie et les capteurs étant reliés les uns aux autres de telle façon que le courant d'échange s'écoule à travers le réseau et que les impulsions de courant (In) soient produites de cette manière, et que l'un des dispositifs de stockage d'énergie est formé par une inductance de stockage (SD) et l'autre dispositif de stockage d'énergie par au moins un condensateur (C, C1, C2) monté en série avec celle-ci, et que l'échange d'énergie entre l'inductance de stockage et ledit condensateur et ainsi l'amplitude et la durée des impulsions de courant (In) engendrées sont commandés par l'intermédiaire du réseau par les points de mise en service/hors service des commutateurs (S1 à S4).

2. Procédé selon la revendication 1, caractérisé en ce que le signal d'émission résultant (Ie) est formé par une série de plusieurs impulsions (In) immédiatement juxtaposées en une rangée.

3. Procédé selon la revendication 2, caractérisé en ce que les impulsions de courant (In) ont une forme approximativement trapézoïdale ou triangulaire de façon que le signal d'émission résultant (Ie) présente un contour en forme de dents de scie.

4. Procédé selon l'une des revendications 1 à 3, caractérisé en ce que la tension (UC, UC1, UC2) est maintenue au condensateur respectif (C, C1, C2) à proximité d'une valeur de consigne par le fait que les commutateurs (S1 à S4) sont commandés de façon qu'au courant de signal souhaité s'additionne un courant effectif de 50 Hz, qui est positif ou négatif.

5. Procédé selon les revendications 1 à 3, caractérisé en ce qu'un condensateur série(CS) est disposé en série avec l'inductance de stockage (SD).

6. Procédé selon la revendication 5, caractérisé en ce que les commutateurs (S1 à S4) sont commandés de telle façon qu'un courant réactif de 50 Hz s'additionne au courant de signal souhaité et qu'une chute de tension de 50 Hz soit produite au condensateur série (CS) de telle manière que les commutateurs puissent être dimensionnés pour une tension réitérée plus faible que celle correspondant à la somme de la tension de réseau (UN) et la tension de condensateur (UC, UC1, UC2).

7. Procédé selon la revendication 6, caractérisé en ce que dans le cas d'une allure trop raide d'une impulsion de courant (In), on provoque un court-circuit à l'aide de l'inductance de stockage (SD) et ainsi utilise pour la production des impulsions de courant exclusivement la tension de réseau (UN).

8. Procédé selon la revendication 1, caractérisé en ce que l'on engendre dans le cas d'une émission simultanée de signaux d'émission de fréquences différentes, la somme des différents signaux d'émission et que celle-ci est approximée par l'émetteur à l'aide d'une série d'impulsions de courant.

9. Emetteur pour la mise en oeuvre du procédé selon la revendication 1 pour la production de signaux de courant d'émission dans un réseau de distribution de courant alternatif, comprenant une charge reliée au réseau, une commutateur (S1, S4) pour la commutation de la charge et ainsi pour produire des impulsions de courant (In) formant le signal d'émission (Ie), et une logique de commande (SL) pour fournir les signaux de commande pour le commutateur, caractérisé en ce que la charge comprend au moins deux dispositifs de stockage d'énergie (SD; C, C1, C2) dont l'un est formé par une inductance de stockage (SD) et l'autre par au moins un condensateur (C, C1, C2) disposé en série avec celle-ci et faisant partie d'un condensateur (GC,GC*) commuté, qu'au moins deux commutateurs (S1 à S4) sont prévus pour la commande de l'échange d'énergie entre au moins les deux dispositifs de stockage d'énergie, le courant d'échange s'écoulant à travers le réseau et la commande au moyen de l'amplitude et la durée des impulsions de courant (In) étant commandée par l'intermédiaire des instants

11

de temps de commutation en service/hors service des commutateurs (S1 à S4).

10. Emetteur selon la revendication 9, caractérisé en ce que l'inductance de stockage (SD) est formée par l'impédance parasite d'un transformateur.

11. Emetteur selon la revendication 9 ou 10, caractérisé en ce que le condensateur commuté (GC) est formé par un montage en pont dans les branches duquel est disposé chaque fois un commutateur commandé (S1 à S4) et dans la diagonale duquel est placé un condensateur de stockage (C).

12. Emetteur selon la revendication 9 ou 10, caractérisé en ce que le condensateur commuté (GC*) est formé par un montage en série d'un montage antiparallèle de deux branches avec respectivement un condensateur commuté (S1, S2) et un condensateur (C1, C2).

13. Emetteur selon la revendication 11 ou 12, caractérisé en ce que les commutateurs commandés (S1 à S4) sont formés par des valves de courant unidirectionnel pouvant être commutées en/hors service.

14. Emetteur selon la revendication 11 ou 12, caractérisé par un condensateur série (CS) monté en série avec l'inductance de stockage (SD)

15. Emetteur selon la revendication 12, caractérisé en ce qu'une troisième branche (10) avec une valve à deux voies (S5) susceptible d'être mise en/hors service est prévue entre les deux branches antiparallèles.

16. Emetteur selon la revendication 10, caractérisé en ce que l'émetteur est configuré en trois phases dans une centrale lors de l'utilisation comme émetteur à commande omnidirectionnelle.

FIG. 1

FIG. 2

FIG. 3

FIG. 4

FIG. 5

GC*

S1

D1

SD

5

UN

S5

S2

D2

C1

C2

6

FIG. 6

GC*

S1

D1

SD

5

CS

S2

D2

C1

C2

6